# EUROPEAN PATENT APPLICATION

(11) **EP 4 548 777 A1**
(43) Date of publication of application: **07.05.2025**
(21) Application number: 22949384.6
(22) Date of filing: 29.06.2022
(51) Int. Cl.: A23L 27/20, A23L 27/00, A23L 27/50

(54) **FERMENTED SEASONING**

(71) Applicant: Kikkoman Corporation, Noda-shi, Chiba 278-8601 (JP)
(72) Inventor: MORI, Hikari, Noda-shi, Chiba 278-8601 (JP); YUZUKI, Masanobu, Noda-shi, Chiba 278-8601 (JP); TAKEICHI, Junya, Noda-shi, Chiba 278-8601 (JP)
(74) Representative: Maiwald GmbH
(86) International application number: PCT/JP2022/026114
(87) International publication number: WO 2024/004110

(57) **Abstract**

The present invention relates to a fermented seasoning containing 3-100 mg/L of 2-(methylthio)ethanol. The present invention also relates to a method for producing a fermented seasoning containing 3-100 mg/L of 2-(methylthio)ethanol, said method comprising adding 2-(methylthio)ethanol to a base fermented seasoning.

## Description

### TECHNICAL FIELD

The present invention relates to a fermented seasoning and a method for producing a fermented seasoning.

### BACKGROUND ART

Soy sauce is a seasoning produced by fermentation of raw materials such as soybeans, wheat, and a common salt using yeasts or the like. Food materials can be dipped in soy sauce or soy sauce can be dripped over food materials. Soy sauce has a wide variety of applications, such as use for cooking of boiled food, broiled food, sauté, and the like. Soy sauce is also used as raw materials of soup, sauce, and the like.

In order to provide a desirable flavor in food materials and cooked products, soy sauce is required to have *umami.* It is conventionally common that a sulfur-containing compound imparts body, lastingness, and spreading to an *umami* solution (Non-Patent Literature 1). It is also common that by heating a seasoning liquid in which soy sauce, soup stocks, or the like is mixed with a sulfur-containing compound such as cysteine or glutathione, the aroma, flavor, or desirable taste of the seasoning liquid is enhanced (Patent Literature 1). Further, it is common that a method for producing a soy sauce-like seasoning having an enhanced heated meat-like aroma, includes a step of heating soy sauce in the presence of pentose, 4-hydroxy-5-methyl-3(2H)-furanone (HMF) and/or a sulfur-containing compound (Patent Literature 2).

### CITATION LIST

### PATENT LITERATURE

Patent Literature 1: Japanese Patent No. 3588817
Patent Literature 2: JP2018-042497A

### NON-PATENT LITERATURE

Non-Patent Literature 1: Ueda Y et al., Composition of Sulfur-Containing Components in Onion and Their Flavor Characters, Biosci. Biotech. Biochem., January 1, 1994, Volume 58, Issue 1, pages 108-110

### SUMMARY OF INVENTION

### TECHNICAL PROBLEM

Patent Literatures 1 and 2 do not refer to an influence of a sulfur-containing compound on *umami* of soy sauce. An object of the present invention is to provide a novel fermented seasoning imparted with *umami.*

### SOLUTION TO PROBLEM

As a result of diligent studies to solve the above problems, the present inventors have found that when a fermented seasoning contains 2-(methylthio)ethanol in a certain amount, *umami* is surprisingly enhanced and lasting, and has completed the present invention based on this finding.

That is, the present invention is as follows.
[1] A fermented seasoning containing 2-(methylthio)ethanol in an amount of 3 mg/L or more and 100 mg/L or less.
[2] The fermented seasoning according to [1], containing malic acid in an amount of 600 mg/L or more and 4,000 mg/L or less.
[3] The fermented seasoning according to [1] or [2], containing phenethyl acetate in an amount of 40 × 10⁻³ mg/L or more and 1,000 × 10⁻³ mg/L or less.
[4] A method for producing the fermented seasoning according to [1], the method including adding 2-(methylthio)ethanol to a base fermented seasoning.

### ADVANTAGEOUS EFFECTS OF INVENTION

According to the present invention, a fermented seasoning having desirable and lasting *umami* can be provided. According to the present invention, a method for producing a fermented seasoning having desirable *umami* can be provided.

### BRIEF DESCRIPTION OF DRAWINGS

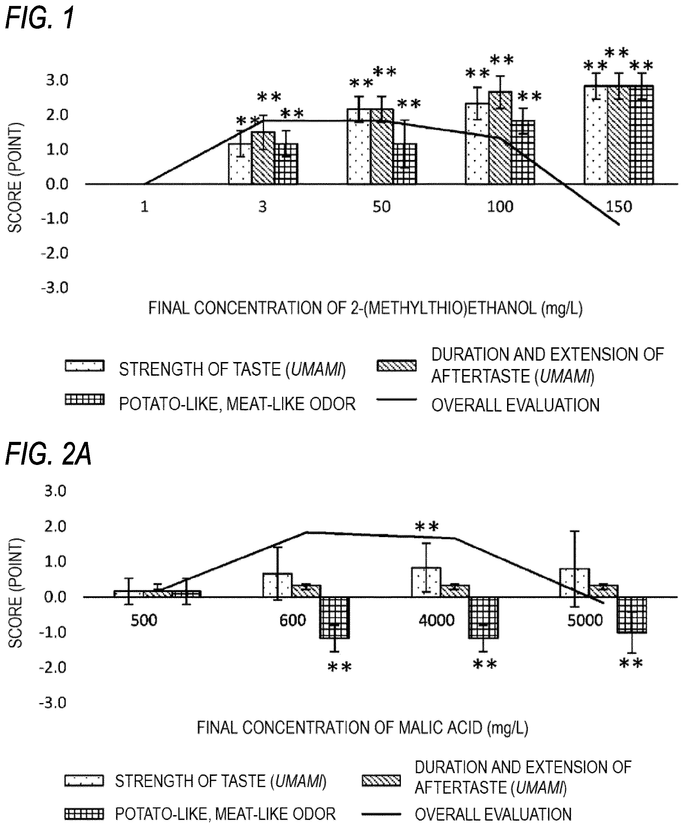

[FIG. 1] FIG. 1 is a graph illustrating results of a sensory evaluation of the fermented seasoning in Example 1. An average value is indicated by a bar graph, and a standard deviation is indicated by an error bar. Note that ** means that the difference is statistically significant (p < 0.05) by a t-test.
[FIG. 2A] FIG. 2A is a graph illustrating results of a sensory evaluation of the fermented seasoning containing 2-(methylthio)ethanol in an amount of 3 mg/L and malic acid in various concentrations in Example 2. An average value is indicated by a bar graph, and a standard deviation is indicated by an error bar. Note that ** means that the difference is statistically significant (p < 0.05) by a t-test.

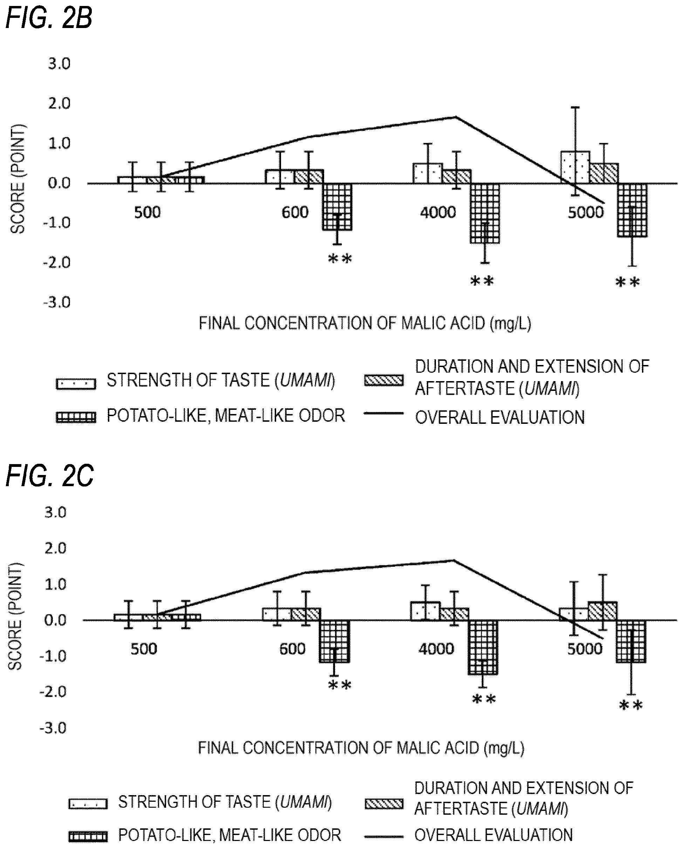

[FIG. 2B] FIG. 2B is a graph illustrating results of a sensory evaluation of the fermented seasoning containing 2-(methylthio)ethanol in an amount of 50 mg/L and malic acid in various concentrations in Example 2. An average value is indicated by a bar graph, and a standard deviation is indicated by an error bar. Note that ** means that the difference is statistically significant (p < 0.05) by a t-test.
[FIG. 2C] FIG. 2C is a graph illustrating results of a sensory evaluation of the fermented seasoning containing 2-(methylthio)ethanol in an amount of 100 mg/L and malic acid in various concentrations in Example 2. An average value is indicated by a bar graph, and a standard deviation is indicated by an error bar. Note that ** means that the difference is statistically significant (p < 0.05) by a t-test.

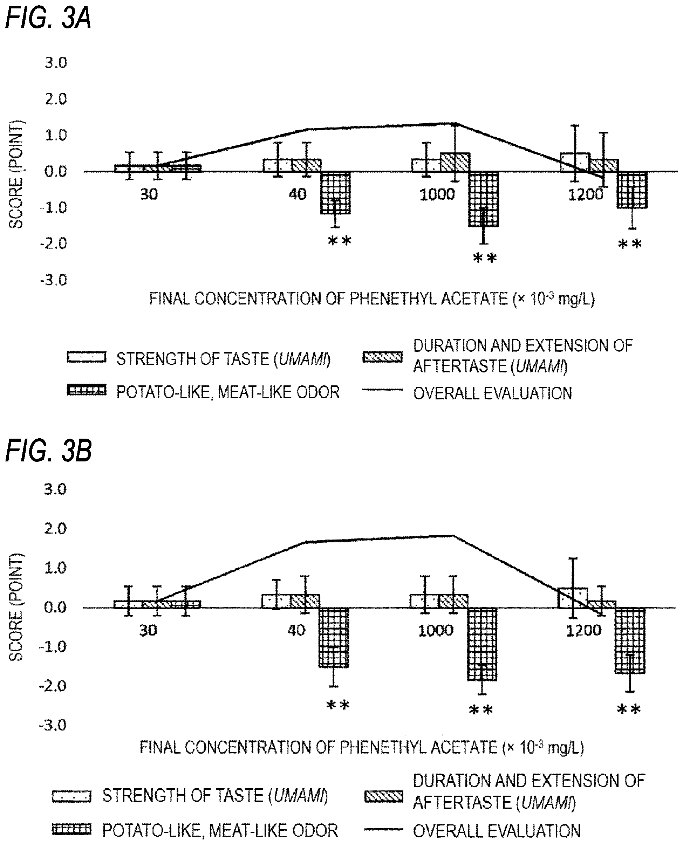

[FIG. 3A] FIG. 3A is a graph illustrating results of a sensory evaluation of the fermented seasoning containing 2-(methylthio)ethanol in an amount of 3 mg/L and phenethyl acetate in various concentrations in Example 3. An average value is indicated by a bar graph, and a standard deviation is indicated by an error bar. Note that ** means that the difference is statistically significant (p < 0.05) by a t-test.
[FIG. 3B] FIG. 3B is a graph illustrating results of a sensory evaluation of the fermented seasoning containing 2-(methylthio)ethanol in an amount of 50 mg/L and phenethyl acetate in various concentrations in Example 3. An average value is indicated by a bar graph, and a standard deviation is indicated by an error bar. Note that ** means that the difference is statistically significant (p < 0.05) by a t-test.

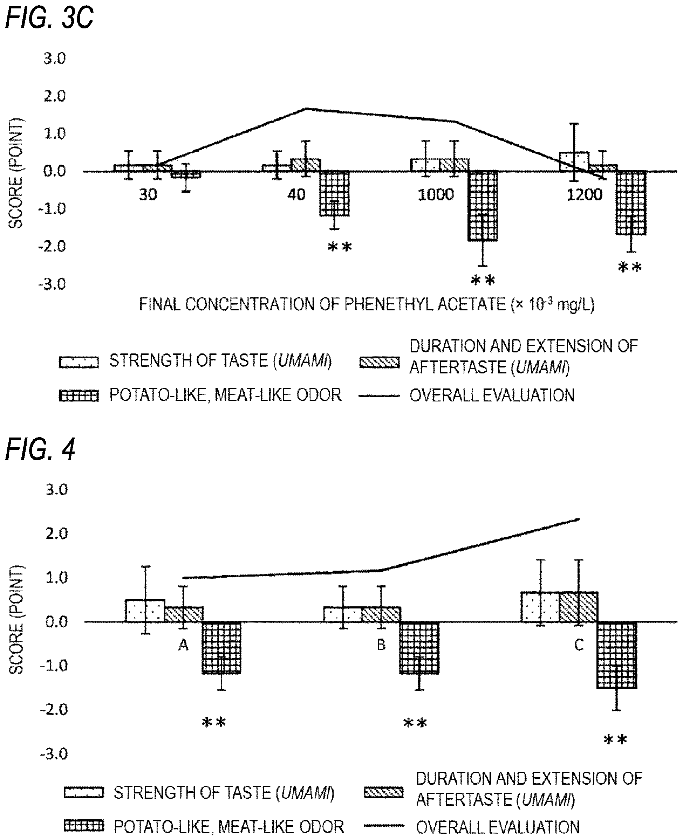

[FIG. 3C] FIG. 3C is a graph illustrating results of a sensory evaluation of the fermented seasoning containing 2-(methylthio)ethanol in an amount of 100 mg/L and phenethyl acetate in various concentrations in Example 3. An average value is indicated by a bar graph, and a standard deviation is indicated by an error bar. Note that ** means that the difference is statistically significant (p < 0.05) by a t-test.
[FIG. 4] FIG. 4 is a graph illustrating results of a sensory evaluation of the fermented seasoning in Example 4. An average value is indicated by a bar graph, and a standard deviation is indicated by an error bar. Note that ** means that the difference is statistically significant (p < 0.05) by a t-test.

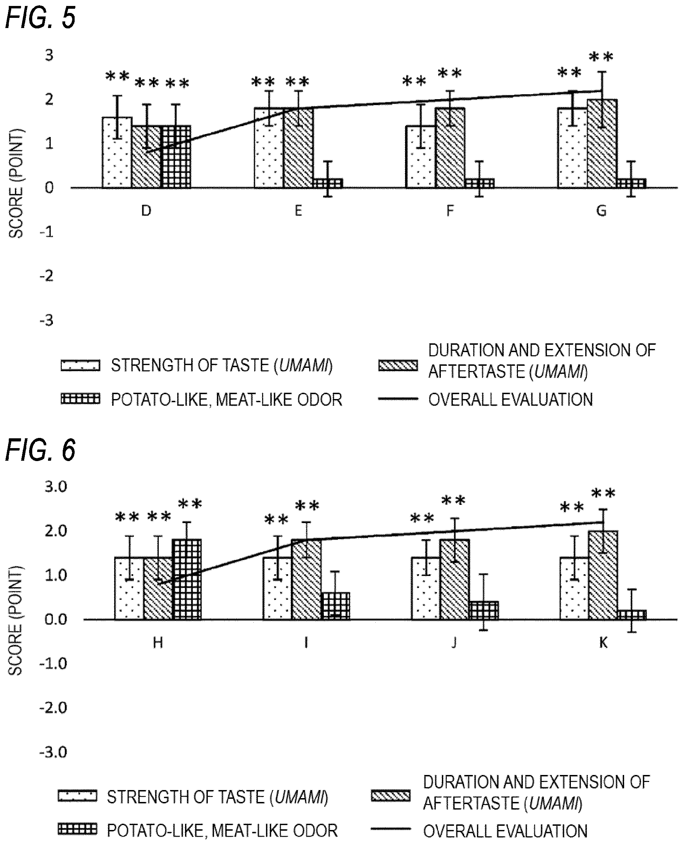

[FIG. 5] FIG. 5 is a graph illustrating results of a sensory evaluation of the fermented seasoning using broad bean soy sauce in Example 5. An average value is indicated by a bar graph, and a standard deviation is indicated by an error bar. Note that ** means that the difference is statistically significant (p < 0.05) by a t-test.
[FIG. 6] FIG. 6 is a graph illustrating results of a sensory evaluation of the fermented seasoning using foxtail millet soy sauce in Example 5. An average value is indicated by a bar graph, and a standard deviation is indicated by an error bar. Note that ** means that the difference is statistically significant (p < 0.05) by a t-test.

### DESCRIPTION OF EMBODIMENTS

Hereinafter, a fermented seasoning and a method for producing a fermented seasoning according to the present invention will be described in detail, but these are examples of desirable embodiments. The present invention is not limited to these contents.

The expression "to" of a numerical range is a range including the numerical values before and after it. For example, "0 mass% to 100 mass%" means a range of 0 mass% or more and 100 mass% or less.

As used herein, "fermented seasoning" means a seasoning obtained by fermentation. Examples of the fermented seasoning include yeast-fermented seasoning, lactic acid bacteria-fermented seasoning, yeast lactic acid bacteria-fermented seasoning, and soy sauce-like seasoning. A yeast-fermented seasoning is preferred. The yeast-fermented seasoning means a seasoning obtained by fermentation using yeast, the lactic acid bacteria-fermented seasoning means a seasoning obtained by fermentation using lactic acid bacteria, and the yeast lactic acid bacteria-fermented seasoning means a seasoning obtained by fermentation using yeast and lactic acid bacteria.

As used herein, "soy sauce" means the "soy sauce" defined by The Japanese Agricultural Standards (May 28, 2015, Ministry of Agriculture, Forestry and Fisheries, Notification No. 1387).

As used herein, "soy sauce-like seasoning" preferably refers to a liquid seasoning used for the same purposes as the "soy sauce" defined by The Japanese Agricultural Standards, and is a concept including soy sauce and processed soy sauce products. Raw materials (for example, soybeans, and wheat) derived from a soy sauce *koji* are not necessarily required to be used for the soy sauce-like seasoning, provided that the soy sauce-like seasoning is used for the same purpose as the "soy sauce". The soy sauce-like seasoning in the present description may be "one that is authentically brewed" in the same manner as described for the "soy sauce" defined by The Japanese Agricultural Standards.

The fermented seasoning in the present description may contain additives such as a fruit juice, a vegetable juice, extracts, soup stocks, sugars, seasoning, alcohol, fermented seasoning, acidulants, and flavoring agents. In addition, the fermented seasoning in the present description may be obtained by using a cereal-derived raw materials such as soybean, barley or wheat, rice, broad bean, foxtail millet, and pea, or vegetables or a fruit such as tomato, onion, carrot, and grape.

As used herein, "*koku* attribute" means a deep, pleasant flavor with lasting tastes including *umami,* that stays in the mouth after eating or drinking.

### [1. Fermented Seasoning]

The fermented seasoning according to the present embodiment contains 2-(methylthio)ethanol in an amount of 3 mg/L to 100 mg/L. When the fermented seasoning contains 2-(methylthio)ethanol in an amount of 3 mg/L to 100 mg/L, the fermented seasoning has desirable *umami* and the *umami* lasts.

The concentration of 2-(methylthio)ethanol can be appropriately set in a range of 3 mg/L to 100 mg/L according to the intended use, the type of the fermented seasoning, and the like. In the fermented seasoning according to the present embodiment, the concentration of 2-(methylthio)ethanol is preferably 3 mg/L to 100 mg/L, and more preferably 3 mg/L to 30 mg/L, from the viewpoint of maintaining the balance of the overall flavor in the seasoning.

The concentration of 2-(methylthio)ethanol can be measured by, for example, a gas chromatograph mass spectrometer (GC-MS).

The fermented seasoning according to the present embodiment may contain malic acid in an amount of 600 mg/L to 4,000 mg/L from the viewpoint of reducing the potato-like odor derived from 2-(methylthio)ethanol. The concentration of malic acid can be appropriately set in a range of 600 mg/L to 4,000 mg/L according to the intended use, the type of the fermented seasoning, and the like.

In the fermented seasoning according to the present embodiment, the concentration of malic acid is preferably 600 mg/L to 4,000 mg/L, and more preferably 1,000 mg/L to 3,000 mg/L, from the viewpoint of maintaining the balance of the overall flavor in the seasoning.

The concentration of malic acid can be measured by, for example, a liquid chromatograph mass spectrometer (LC-MS).

The fermented seasoning according to the present embodiment may contain phenethyl acetate in an amount of 40 × 10⁻³ mg/L to 1,000 × 10⁻³ mg/L from the viewpoint of reducing the potato-like odor derived from 2-(methylthio)ethanol. The concentration of phenethyl acetate can be appropriately set in a range of 40 × 10⁻³ mg/L to 1,000 × 10⁻³ mg/L according to the intended use, the type of the fermented seasoning, and the like.

In the fermented seasoning according to the present embodiment, the concentration of phenethyl acetate is preferably 40 × 10⁻³ mg/L to 1,000 × 10⁻³ mg/L, and more preferably 40 × 10⁻³ mg/L to 200 × 10⁻³ mg/L, from the viewpoint of maintaining the balance of the overall flavor in the seasoning.

The concentration of phenethyl acetate can be measured by, for example, GC-MS.

The fermented seasoning according to the present embodiment may contain 4-Hydroxy-2 (or 5) ethyl-5 (or 2) methyl-3(2H)-furanone (hereinafter also referred to as "HEMF"). The concentration of HEMF in the fermented seasoning is preferably 0.2 mg/L to 500 mg/L, and particularly preferably 5.0 mg/L to 200 mg/L. When the concentration of HEMF is 0.2mg/L or more, preferred aroma of soy sauce is sensed. When the concentration of HEMF is 5.0 mg/L or more, preferred aroma of soy sauce is further remarkably sensed. When the concentration of HEMF is 500 mg/L or less, the aroma of components does not become extremely strong, and the balance of the aroma can be ensured.

HEMF can be analyzed and quantified by a gas chromatography method (refer to Journal of Agricultural and Food Chemistry Vol.39, 934 (1991)).

The salt concentration of the fermented seasoning according to the present embodiment is not particularly limited, but is preferably 20% (w/v) or less, and more preferably 17% (w/v) or less, from the viewpoint of flavor for the application such as dipping, dropping , or cooking. In the fermented seasoning according to the present embodiment, a lower limit of the salt concentration is not particularly limited, and may be 0% (w/v) (non-salt).

The salt concentration can be measured by a common method such as potentiometry and the Mohr's method.

Examples of a non-limiting specific aspect of the fermented seasoning according to an aspect of the present invention include a fermented seasoning in which the contents of 2-(methylthio)ethanol and malic acid are (1-1) and (1-2) as follows, respectively:
(1-1) Content of 2-(methylthio)ethanol: 3 mg/L to 100 mg/L
(2-1) Content of malic acid: 600 mg/L to 4,000 mg/L

Examples of a non-limiting specific aspect of the fermented seasoning according to an aspect of the present invention include a fermented seasoning in which the amount of malic acid is preferably 6 parts by weight to 1,333 parts by weight, and more preferably 33 parts by weight to 1,000 parts by weight, with respect to 1 part by weight of 2-(methylthio)ethanol.

Examples of non-limiting specific aspect of the fermented seasoning according to an aspect of the present invention include a fermented seasoning in which the contents of 2-(methylthio)ethanol and phenethyl acetate are (1-2) and (3-2) as follows, respectively:
(1-2) Content of 2-(methylthio)ethanol: 3 mg/L to 100 mg/L
(3-2) Content of phenethyl acetate: 40 × 10⁻³ mg/L to 1,000 × 10⁻³ mg/L

Examples of a non-limiting specific aspect of the fermented seasoning according to an aspect of the present invention include a fermented seasoning in which the amount of phenethyl acetate is preferably 0.0004 parts by weight to 0.333 parts by weight, and more preferably 0.001 parts by weight to 0.067 parts by weight, with respect to 1 part by weight of 2-(methylthio)ethanol.

Examples of a non-limiting specific aspect of the fermented seasoning according to an aspect of the present invention include a fermented seasoning in which the contents of 2-(methylthio)ethanol, malic acid, and phenethyl acetate are (1-3), (2-3), and (3-3) as follows, respectively:
(1-3) Content of 2-(methylthio)ethanol: 3 mg/L to 100 mg/L
(2-3) Content of malic acid: 600 mg/L to 4,000 mg/L
(3-3) Content of phenethyl acetate: 40 × 10⁻³ mg/L to 1,000 × 10⁻³ mg/L

Examples of a non-limiting specific aspect of the fermented seasoning according to an aspect of the present invention include the fermented seasoning in which the amounts of malic acid and phenethyl acetate are preferably 6 parts by weight to 1,333 parts by weight and 0.0004 parts by weight to 0.333 parts by weight, respectively, and more preferably 33 parts by weight to 1,000 parts by weight and 0.001 parts by weight to 0.067 parts by weight, respectively, with respect to 1 part by weight of 2-(methylthio)ethanol.

The fermented seasoning according to the present embodiment may be used in the same manner as the "soy sauce" of The Japanese Agricultural Standards, or may be used by being blended into any food and beverages. For example, it can be used by being added to a seasoning such as *tsuyu* (broth, soup, dipping sauce, sauce), *tare* (sauce), Japanese soup stocks, Western soup stocks, Chinese soup stocks, dressing, soup, ketchup, tomato sauce, Worcestershire sauce, and other sauces.

### [2. Method for Producing Fermented Seasoning]

A method for producing a fermented seasoning containing 2-(methylthio)ethanol in an amount of 3 mg/L or more and 100 mg/L or less according to the present embodiment includes adding 2-(methylthio)ethanol to a base fermented seasoning.

A method for producing a fermented seasoning containing 2-(methylthio)ethanol in an amount of 3 mg/L or more and 100 mg/L or less of and malic acid in an amount of 600 mg/L or more and 4,000 mg/L or less in one aspect of the present embodiment includes adding 2-(methylthio)ethanol and malic acid to a base fermented seasoning.

A method for producing a fermented seasoning containing 2-(methylthio)ethanol in an amount of 3 mg/L or more and 100 mg/L or less and phenethyl acetate in an amount of 40 × 10⁻³ mg/L or more and 1,000 × 10⁻³ mg/L or less in one aspect of the present embodiment includes adding 2-(methylthio)ethanol and phenethyl acetate to a base fermented seasoning.

A method for producing a fermented seasoning containing 2-(methylthio)ethanol in an amount of 3 mg/L or more and 100 mg/L or less, malic acid in an amount of 600 mg/L or more and 4,000 mg/L or less, and phenethyl acetate in an amount of 40 × 10⁻³ mg/L or more and 1,000 × 10⁻³ mg/L or less in one aspect of the present embodiment includes adding 2-(methylthio)ethanol, malic acid, and phenethyl acetate to a base fermented seasoning.

The final concentration of 2-(methylthio)ethanol in the fermented seasoning to be produced can be appropriately set to 3 mg/L or more and 100 mg/L or less, preferably 3 mg/L to 100 mg/L, and more preferably 3 mg/L to 30 mg/L.

The final concentration of malic acid in the fermented seasoning to be produced can be appropriately set to 600 mg/L or more and 4,000 mg/L or less, preferably 600 mg/L to 4,000 mg/L, and more preferably 1,000 mg/L to 3,000 mg/L.

The final concentration of phenethyl acetate in the fermented seasoning to be produced can be appropriately set to 40 × 10⁻³ mg/L or more and 1,000 × 10⁻³ mg/L or less, preferably 40 × 10⁻³ mg/L to 1,000 × 10⁻³ mg/L, and more preferably 40 × 10⁻³ mg/L to 200 × 10⁻³ mg/L.

The production method according to the present embodiment may include measuring the amount of at least one of 2-(methylthio)ethanol, malic acid, and phenethyl acetate in the base fermented seasoning before adding at least one of 2-(methylthio)ethanol, malic acid, and phenethyl acetate to the base fermented seasoning. In addition, the production method according to the present embodiment may not include heating the fermented seasoning after the above-mentioned components are added to the base fermented seasoning. In the production method according to the present embodiment, dilution, concentration (deaeration, heating, drying, heating/deaeration under reduced pressure, and the like), addition of various additives, and the like may be performed as necessary.

As the base fermented seasoning, for example, soy sauce or liquid seasoning produced by a common method can be used.

For example, when the base fermented seasoning contains 2-(methylthio)ethanol in an amount of 1 mg/L, a fermented seasoning containing 2-(methylthio)ethanol in an amount of 3 mg/L or more and 100 mg/L or less can be produced by adding 2-(methylthio)ethanol in an amount of 2 mg/L to 99 mg/L.

As another example, the fermented seasoning according to the present embodiment can also be produced by producing 2-(methylthio)ethanol or the like in the base fermented seasoning through microbial fermentation. Examples of microbe used for the microbial fermentation include lactic acid bacteria and yeast.

The obtained fermented seasoning may be refined. The refining method is not limited, and may be performed by common methods such as a membrane process, diatomaceous earth filtration, centrifugation, aggregation, and sedimentation.

The obtained fermented seasoning may be pasteurized or processed for removal of bacteria. In the case of pasteurization, the process involves a heat pasteurization step. The heating may be performed under the heating conditions used in a common soy sauce production process. Preferably, the fermented seasoning is heated at 80°C to 85°C for 20 minutes to 60 minutes, or at 110°C to 120°C for 5 seconds to 20 seconds, and then cooled. Because the heating may produce sediments, the fermented seasoning is allowed to stand for a few days, and the supernatant is separated from the sediment to obtain the product fermented seasoning. For removal of bacteria, the fermented seasoning is, for example, filtered using a common MF membrane, and the filtrate is obtained as the product fermented seasoning.

### Examples

Hereinafter, the present invention will be described more specifically based on Examples. However, the present invention is not limited to the following Examples.

### [Example 1. Addition of 2-(methylthio)ethanol to Koikuchi (Dark-Colored) Soy Sauce]

An influence of adding 2-(methylthio)ethanol on a fermented seasoning was evaluated.

<Production of Fermented Seasoning Containing 2-(methylthio)ethanol> 2-(methylthio)ethanol was added to a *koikuchi* (dark-colored) soy sauce ("KOIKUCHISHOYU" manufactured by KIKKOMAN CORPORATION) to achieve the final concentration thereof as illustrated in Table 2. The above-mentioned *koikuchi* (dark-colored) soy sauce contains 2-(methylthio)ethanol in an amount of 1.5 mg/L, malic acid in an amount of 364 mg/L, and phenethyl acetate in an amount of 16 × 10⁻³ mg/L.

### <Sensory Evaluation>

The fermented seasoning described in Table 2 was subjected to sensory evaluation. The sensory evaluation was made by ten panelists having a discrimination ability. The panelists were asked to evaluate 1: taste (*umami*), 2: aftertaste (*umami*), 3: potato-like or meat-like odor, and 4: overall flavor, in seven levels as shown in Table 1, relative to a *koikuchi* (dark-colored) soy sauce to which 2-(methylthio)ethanol was not added as the reference level (0 point), and average values and standard deviations were calculated. The taste refers to a taste that is sensed gradually after containing the seasoning in the mouth. The aftertaste refers to a taste that stays in the mouth as an afterglow after taking in the seasoning. Results are illustrated in Table 2 and FIG. 1.

**[Table 1]**

| Evaluation criteria 1: strength of taste (*umami*) | | Evaluation criteria 3: strength of potato-like or meat-like odor | |
|---|---|---|---|
| 3 | Strength of taste (*umami*) is very strong. | 3 | Strength of at least one of potato-like or meat odor is very strong. |
| 2 | Strength of taste (*umami*) is strong. | 2 | Strength of at least one of potato-like or meat-like odor is strong. |
| 1 | Strength of taste (*umami*) is slightly strong. | 1 | Strength of at least one of potato-like or meat-like odor is slightly strong. |
| 0 | Strength of taste (*umami*) is not different from the reference level. | 0 | Strength of potato-like and meat-like odor is not different from the reference level. |
| -1 | Strength of taste (*umami*) is slightly weak. | -1 | Strength of at least one of potato-like or meat-like odor is slightly weak. |
| -2 | Strength of taste (*umami*) is weak. | -2 | Strength of at least one of potato-like or meat-like odor is weak. |
| -3 | Strength of taste (*umami*) cannot be sensed. | -3 | Strength of at least one of potato-like or meat-like odor cannot be sensed. |

| Evaluation criteria 2: the presence or absence of duration and extension of aftertaste (*umami*) | | Evaluation criteria 4: overall evaluation (as entire flavor) | |
|---|---|---|---|
| 3 | Duration and extension of aftertaste (*umami*) is very strong. | 3 | Particularly preferred as compared with the reference level. |
| 2 | Duration and extension of aftertaste (*umami*) is strong. | 2 | Preferred as compared with the reference level. |
| 1 | Duration and extension of aftertaste (*umami*) is slightly strong. | 1 | Slightly preferred as compared with the reference level. |
| 0 | Duration and extension of aftertaste (*umami*) is not different from the reference level. | 0 | No difference of preference as compared with the reference level. |
| -1 | Duration and extension of aftertaste (*umami*) is slightly weak. | -1 | Slightly not preferred as compared with the reference level. |
| -2 | Duration and extension of aftertaste (*umami*) is weak. | -2 | Not preferred as compared with the reference level. |
| -3 | Duration and extension of aftertaste (*umami*) cannot be sensed. | -3 | Particularly not preferred as compared with the reference level. |

**[Table 2]**

| | | Final concentration/evaluation results | | | | |
|---|---|---|---|---|---|---|
| Aroma component | 2-(methylthio)ethanol (mg/L) | 1 | 3 | 50 | 100 | 150 |
| Evaluation items | Strength of taste (*umami*) | 0.0 | 1.2 | 2.2 | 2.3 | 2.8 |
| | Duration and extension of aftertaste (*umami*) | 0.0 | 1.5 | 2.2 | 2.7 | 2.8 |
| | Potato-like, meat-like odor | 0.0 | 1.2 | 1.2 | 1.8 | 2.8 |
| | Overall evaluation | 0.0 | 1.8 | 1.8 | 1.3 | -1.2 |

By adding 2-(methylthio)ethanol to the *koikuchi* (dark-colored) soy sauce, an effect of enhancing the *umami* from taste to aftertaste was confirmed. The potato-like odor of the fermented seasoning in which the final concentration of 2-(methylthio)ethanol was 150 mg/L, was strongly sensed, and the score of the overall evaluation was low. Accordingly, the concentration range of 2-(methylthio)ethanol that contributes to achievement of the preferred effect was 3 mg/L to 100 mg/L.

### [Example 2. Addition of 2-(methylthio)ethanol and Malic Acid to Koikuchi (Dark-Colored) Soy Sauce]

An influence of addition of 2-(methylthio)ethanol and malic acid on a fermented seasoning was evaluated.

### <Production of Fermented Seasoning Containing 2-(methylthio)ethanol and Malic Acid>

2-(methylthio)ethanol and malic acid were added to a *koikuchi* (dark-colored) soy sauce ("KOIKUCHISHOYU" manufactured by KIKKOMAN CORPORATION) to achieve final concentrations thereof as illustrated in Table 3, Table 4, and Table 5.

### <Sensory Evaluation>

In the fermented seasoning of Table 3, a fermented seasoning to which malic acid was not added and in which the final concentration of 2-(methylthio)ethanol was 3 mg/L was used as the reference level (0 point). In the fermented seasoning of Table 4, a fermented seasoning to which malic acid was not added and in which the final concentration of 2-(methylthio)ethanol was 50 mg/L was used as the reference level (0 point). In the fermented seasoning of Table 5, a fermented seasoning to which malic acid was not added and in which the final concentration of 2-(methylthio)ethanol was 100 mg/L was used as the reference level (0 point). The fermented seasonings described in Table 3, Table 4, and Table 5 were subjected to the sensory evaluation in the same manner as in Example 1 except that the fermented seasoning used as the reference level was different. The results are illustrated in Table 3, Table 4, Table 5, FIG. 2A, FIG. 2B, and FIG. 2C. FIG. 2A illustrates the results of sensory evaluation of the fermented seasoning described in Table 3. FIG. 2B illustrates the results of sensory evaluation of the fermented seasoning described in Table 4. FIG. 2C illustrates the results of sensory evaluation of the fermented seasoning described in Table 5.

**[Table 3]**

| | | Final concentration/evaluation results | | | |
|---|---|---|---|---|---|
| Aroma component | Final concentration of 2-(methylthio)ethanol (mg/L) | 3 | 3 | 3 | 3 |
| | Final concentration of malic acid (mg/L) | 500 | 600 | 4,000 | 5,000 |
| Evaluation items | Strength of taste (*umami*) | 0.2 | 0.7 | 0.8 | 0.8 |
| | Duration and extension of aftertaste (*umami*) | 0.2 | 0.3 | 0.3 | 0.3 |
| | Potato-like, meat-like odor | 0.2 | -1.2 | -1.2 | -1.0 |
| | Overall evaluation | 0.2 | 1.8 | 1.7 | -0.2 |

**[Table 4]**

| | | Final concentration/evaluation results | | | |
|---|---|---|---|---|---|
| Aroma component | Final concentration of 2-(methylthio)ethanol (mg/L) | 50 | 50 | 50 | 50 |
| | Final concentration of malic acid (mg/L) | 500 | 600 | 4,000 | 5,000 |
| Evaluation items | Strength of taste (*umami*) | 0.2 | 0.3 | 0.5 | 0.8 |
| | Duration and extension of aftertaste (*umami*) | 0.2 | 0.3 | 0.3 | 0.5 |
| | Potato-like, meat-like odor | 0.2 | -1.2 | -1.5 | -1.3 |
| | Overall evaluation | 0.2 | 1.2 | 1.7 | -0.5 |

**[Table 5]**

| | | Final concentration/evaluation results | | | |
|---|---|---|---|---|---|
| Aroma component | Final concentration of 2-(methylthio)ethanol (mg/L) | 100 | 100 | 100 | 100 |
| | Final concentration of malic acid (mg/L) | 500 | 600 | 4,000 | 5,000 |
| Evaluation items | Strength of taste (*umami*) | 0.2 | 0.3 | 0.5 | 0.3 |
| | Duration and extension of aftertaste (*umami*) | 0.2 | 0.3 | 0.3 | 0.5 |
| | Potato-like, meat-like odor | 0.2 | -1.2 | -1.5 | -1.2 |
| | Overall evaluation | 0.2 | 1.3 | 1.7 | -0.5 |

By adding malic acid to the *koikuchi* (dark-colored) soy sauce in addition to 2-(methylthio)ethanol, the potato-like odor was reduced as compared with the case where malic acid was not added. The sourness and harshness of the fermented seasoning in which the final concentration of malic acid was 5,000 mg/L were strong, and the score of the overall evaluation was low. Accordingly, the concentration range of malic acid that contributes to achievement of the preferred effect was 600 mg/L to 4,000 mg/L.

### [Example 3. Addition of 2-(methylthio)ethanol and Phenethyl Acetate to Koikuchi (Dark-Colored) Soy Sauce]

An influence of addition of 2-(methylthio)ethanol and phenethyl acetate on a fermented seasoning was evaluated.

### <Production of Fermented Seasoning Containing 2-(methylthio)ethanol and Phenethyl Acetate>

2-(methylthio)ethanol and phenethyl acetate were added to a *koikuchi* (dark-colored) soy sauce ("KOIKUCHISHOYU" manufactured by KIKKOMAN CORPORATION) to achieve the final concentrations thereof as illustrated in Table 6, Table 7, and Table 8.

### <Sensory Evaluation>

In the fermented seasoning of Table 6, a fermented seasoning to which phenethyl acetate was not added and in which the final concentration of 2-(methylthio)ethanol was 3 mg/L was used as the reference level (0 point). In the fermented seasoning of Table 7, a fermented seasoning to which phenethyl acetate was not added and in which the final concentration of 2-(methylthio)ethanol was 50 mg/L was used as the reference level (0 point). In the fermented seasoning of Table 8, a fermented seasoning to which phenethyl acetate was not added and in which the final concentration of 2-(methylthio)ethanol was 100 mg/L was used as the reference level (0 point). The fermented seasonings described in Table 6, Table 7, and Table 8 were subjected to the sensory evaluation in the same manner as in Example 1 except that the fermented seasoning used as the reference level was different. The results are illustrated in Table 6, Table 7, Table 8, FIG. 3A, FIG. 3B, and FIG. 3C. FIG. 3A illustrates the results of sensory evaluation of the fermented seasoning described in Table 6. FIG. 3B illustrates the results of sensory evaluation of the fermented seasoning described in Table 7. FIG. 3C illustrates the results of sensory evaluation of the fermented seasoning described in Table 8.

**[Table 6]**

| | | Final concentration/evaluation results | | | |
|---|---|---|---|---|---|
| Aroma component | Final concentration of 2-(methylthio)ethanol (mg/L) | 3 | 3 | 3 | 3 |
| | Final concentration of phenethyl acetate (mg/L) | 30 × 10⁻³ | 40 × 10⁻³ | 1,000 × 10⁻³ | 1,200 × 10⁻³ |
| Evaluation items | Strength of taste (*umami*) | 0.2 | 0.3 | 0.3 | 0.5 |
| | Duration and extension of aftertaste (*umami*) | 0.2 | 0.3 | 0.5 | 0.3 |
| | Potato-like, meat-like odor | 0.2 | -1.2 | -1.5 | -1.0 |
| | Overall evaluation | 0.2 | 1.2 | 1.3 | -0.2 |

**[Table 7]**

| | | Final concentration/evaluation results | | | |
|---|---|---|---|---|---|
| Aroma component | Final concentration of 2-(methylthio)ethanol (mg/L) | 50 | 50 | 50 | 50 |
| | Final concentration of phenethyl acetate (mg/L) | 30 × 10⁻³ | 40 × 10⁻³ | 1,000 × 10⁻³ | 1,200 × 10⁻³ |
| Evaluation items | Strength of taste (*umami*) | 0.2 | 0.3 | 0.3 | 0.5 |
| | Duration and extension of aftertaste (*umami*) | 0.2 | 0.3 | 0.3 | 0.2 |
| | Potato-like, meat-like odor | 0.2 | -1.5 | -1.8 | -1.7 |
| | Overall evaluation | 0.2 | 1.7 | 1.8 | -0.2 |

**[Table 8]**

| | | Final concentration/evaluation results | | | |
|---|---|---|---|---|---|
| Aroma component | Final concentration of 2-(methylthio)ethanol (mg/L) | 100 | 100 | 100 | 100 |
| | Final concentration of phenethyl acetate (mg/L) | 30 × 10⁻³ | 40 × 10⁻³ | 1,000 × 10⁻³ | 1,200 × 10⁻³ |
| Evaluation items | Strength of taste (*umami*) | 0.2 | 0.2 | 0.3 | 0.5 |
| | Duration and extension of aftertaste (*umami*) | 0.2 | 0.3 | 0.3 | 0.2 |
| | Potato-like, meat-like odor | -0.2 | -1.2 | -1.8 | -1.7 |
| | Overall evaluation | 0.2 | 1.7 | 1.3 | -0.2 |

By adding phenethyl acetate to the *koikuchi* (dark-colored) soy sauce in addition to 2-(methylthio)ethanol, the potato-like odor was reduced as compared with the case where phenethyl acetate was not added. The rose-like aroma of the fermented seasoning in which the final concentration of phenethyl acetate was 1,200 × 10⁻³ mg/L was strong, and the score of the overall evaluation was low. Accordingly, the concentration range of phenethyl acetate that contributes to achievement of the preferred effect was 40 × 10⁻³ mg/L to 1,000 × 10⁻³ mg/L.

### [Example 4. Addition of 2-(methylthio)ethanol, Malic Acid, and Phenethyl Acetate to Koikuchi (Dark-Colored) Soy Sauce]

An influence of addition of 2-(methylthio)ethanol, malic acid, and phenethyl acetate on a fermented seasoning was evaluated.

### <Production of Fermented Seasoning Containing 2-(methylthio)ethanol, Malic Acid, and Phenethyl Acetate>

2-(methylthio)ethanol, malic acid, and phenethyl acetate were added to a *koikuchi* (dark-colored) soy sauce ("KOIKUCHISHOYU" manufactured by KIKKOMAN CORPORATION) to achieve the final concentrations thereof as illustrated in Table 9.

### <Sensory Evaluation>

In the fermented seasoning of Table 9, a fermented seasoning to which malic acid and phenethyl acetate were not added and in which the final concentration of 2-(methylthio)ethanol was 3 mg/L was used as the reference level (0 point). The fermented seasoning described in Table 9 was subjected to the sensory evaluation in the same manner as in Example 1 except that the fermented seasoning used as the reference level was different. The results are illustrated in Table 9 and FIG. 4.

**[Table 9]**

| | | Final concentration/evaluation results | | |
|---|---|---|---|---|
| Test example | | A | B | C |
| Aroma component | Final concentration of 2-(methylthio)ethanol (mg/L) | 3 | 3 | 3 |
| | Final concentration of malic acid (mg/L) | 600 | 364 | 600 |
| | Final concentration of phenethyl acetate (mg/L) | 16 × 10⁻³ | 40 × 10⁻³ | 40 × 10⁻³ |
| Evaluation items | Strength of taste (*umami*) | 0.5 | 0.3 | 0.7 |
| | Duration and extension of aftertaste (*umami*) | 0.3 | 0.3 | 0.7 |
| | Potato-like, meat-like odor | -1.2 | -1.2 | -1.5 |
| | Overall evaluation | 1.0 | 1.2 | 2.3 |

In the fermented seasoning to which three components of 2-(methylthio)ethanol, malic acid, and phenethyl acetate were added, an effect of reducing the potato-like odor derived from 2-(methylthio)ethanol was confirmed, and the score of the overall evaluation was also high. Accordingly, it was found that the fermented seasoning obtained by adding three components of 2-(methylthio)ethanol, malic acid, and phenethyl acetate also exerts excellent effects similar to the fermented seasoning obtained by adding two components of 2-(methylthio)ethanol and malic acid or phenethyl acetate.

### [Example 5. Addition of 2-(methylthio)ethanol, Malic Acid, and Phenethyl Acetate to Broad Bean Soy Sauce and Foxtail Millet Soy Sauce]

An influence of addition of 2-(methylthio)ethanol, malic acid, and phenethyl acetate on a broad bean soy sauce and a foxtail millet soy sauce was evaluated.

### <Production of Fermented Seasoning Containing 2-(methylthio)ethanol, Malic Acid, and Phenethyl Acetate>

2-(methylthio)ethanol, malic acid, and phenethyl acetate were added to the foxtail millet soy sauce (manufactured by OHTAKASHOYU CORPORATION) and the broad bean soy sauce (manufactured by TAKAHASHI SHOTEN), respectively, to achieve the final concentrations thereof as illustrated in Tables 11 and 12. The contents of 2-(methylthio)ethanol, malic acid, and phenethyl acetate in the above-described foxtail millet soy sauce and broad bean soy sauce are as illustrated in Table 10.

**[Table 10]**

| | 2-(methylthio)ethanol | Malic acid | Phenethyl acetate |
|---|---|---|---|
| Broad bean soy sauce | 0.038 mg/L | 0.016 mg/L | 6.7 × 10⁻³ mg/L |
| Foxtail millet soy sauce | 0.025 mg/L | 128 mg/L | 10.4 × 10⁻³ mg/L |

### <Sensory Evaluation>

In the fermented seasoning of Tables 11 and 12, the broad bean soy sauce and the foxtail millet soy sauce to which 2-(methylthio)ethanol, malic acid, and phenethyl acetate were not added were used as the reference level (0 point), respectively. The fermented seasoning described in Table 11 and Table 12 were subjected to the sensory evaluation in the same manner as in Example 1 except that the fermented seasoning used as the reference level was different. Table 11 and FIG. 5 illustrate results of the fermented seasoning using the broad bean soy sauce, and Table 12 and FIG. 6 illustrate results of the fermented seasoning using the foxtail millet soy sauce.

**[Table 11]**

| | | Final concentration/evaluation results | | | |
|---|---|---|---|---|---|
| Test example | | D | E | F | G |
| Aroma component | Final concentration of 2-(methylthio)ethanol (mg/L) | 3 | 3 | 3 | 3 |
| | Final concentration of malic acid (mg/L) | 0.016 | 600 | 0.016 | 600 |
| | Final concentration of phenethyl acetate (mg/L) | 6.7 × 10⁻³ | 6.7 × 10⁻³ | 40 × 10⁻³ | 40 × 10⁻³ |
| Evaluation items | Strength of taste (*umami*) | 1.6 | 1.8 | 1.4 | 1.8 |
| | Duration and extension of aftertaste (*umami*) | 1.4 | 1.8 | 1.8 | 2 |
| | Potato-like, meat-like odor | 1.4 | 0.2 | 0.2 | 0.2 |
| | Overall evaluation | 0.8 | 1.8 | 2 | 2.2 |

**[Table 12]**

| | | Final concentration/evaluation results | | | |
|---|---|---|---|---|---|
| Test example | | H | I | J | K |
| Aroma component | Final concentration of 2-(methylthio)ethanol (mg/L) | 3 | 3 | 3 | 3 |
| | Final concentration of malic acid (mg/L) | 128 | 600 | 128 | 600 |
| | Final concentration of phenethyl acetate (mg/L) | 10.4 × 10⁻³ | 10.4 × 10⁻³ | 40 × 10⁻³ | 40 × 10⁻³ |
| Evaluation items | Strength of taste (*umami*) | 1.4 | 1.4 | 1.4 | 1.4 |
| | Duration and extension of aftertaste (*umami*) | 1.4 | 1.8 | 1.8 | 2.0 |
| | Potato-like, meat-like odor | 1.8 | 0.6 | 0.4 | 0.2 |
| | Overall evaluation | 0.8 | 1.8 | 2.0 | 2.2 |

It was confirmed that when 2-(methylthio)ethanol, malic acid, and phenethyl acetate were added to each of the broad bean soy sauce and the foxtail millet soy sauce, they had the effect of enhancing and lasting *umami,* and the effect of suppressing the potato-like odor as well as the cases where these components were added to the *koikuchi* (dark-colored) soy sauce.

### INDUSTRIAL APPLICABILITY

The fermented seasoning according to the present embodiment contains 2-(methylthio)ethanol in an amount of 3 mg/L to 100 mg/L to have desirable and lasting *umami.*

## Claims

1. A fermented seasoning comprising 2-(methylthio)ethanol in an amount of 3 mg/L or more and 100 mg/L or less.

2. The fermented seasoning according to claim 1, comprising malic acid in an amount of 600 mg/L or more and 4,000 mg/L or less.

3. The fermented seasoning according to claim 1 or 2, comprising phenethyl acetate in an amount of 40 × 10⁻³ mg/L or more and 1,000 × 10⁻³ mg/L or less.

4. A method for producing the fermented seasoning according to claim 1, the method comprising adding 2-(methylthio)ethanol to a base fermented seasoning.
